# EUROPÄISCHE PATENTSCHRIFT

(11) **EP 2 137 497 B1**
(45) Veröffentlichungstag und Bekanntmachung des Hinweises auf die Patenterteilung: **28.07.2010**
(21) Anmeldenummer: 08735022.9
(22) Anmeldetag: 04.04.2008
(51) Int. Cl.: G01D 4/00

(54) **VERSORGUNGSMEDIENMENGENERFASSUNGSSYSTEM UND VERFAHREN ZUM BETREIBEN EINES VERSORGUNGSMEDIENMENGENERFASSUNGSSYSTEMS**
SYSTEM FOR RECORDING AMOUNTS OF SUPPLIED MEDIA, AND METHOD FOR THE OPERATION THEREOF
SYSTÈME DE DÉTERMINATION QUANTITATIVE DE RESSOURCES DISTRIBUÉES ET PROCÉDÉ POUR FAIRE FONCTIONNER UN SYSTÈME DE DÉTERMINATION QUANTITATIVE DE RESSOURCES DISTRIBUÉES

(30) Priorität: 07.04.2007 DE 102007017985
(43) Veröffentlichungstag der Anmeldung: 30.12.2009
(73) Patentinhaber: EnBW Energie Baden-Württemberg AG, 76131 Karlsruhe (DE)
(72) Erfinder: VESPER, Martin, 42399 Wuppertal (DE)
(74) Vertreter: Kaufmann, Ursula Josefine
(86) Internationale Anmeldenummer: PCT/EP2008/002690
(87) Internationale Veröffentlichungsnummer: WO 2008/122408

(56) Entgegenhaltungen:
- WO-A-00/00935
- GB-A- 2 272 530
- GB-A- 2 302 952
- GB-A- 2 324 610
- US-A1- 2002 169 570
- US-A1- 2004 186 672
- US-A1- 2006 044 158

## Beschreibung

Die Erfindung betrifft ein Versorgungsmedienmengenerfassungssystem und ein Verfahren zum Betreiben eines Versorgungsmedienmengenerfassungssystems nach den Oberbegriffen der unabhängigen Ansprüche.

Um Verbrauchsmengen wie etwa den Stromverbrauch in Haushalten zu erfassen, erfolgt das Auslesen der Stromzähler vor Ort üblicherweise durch Personal der Stadtwerke oder ähnliche Einrichtungen, oder der Verbraucher selbst liest die Verbrauchsmenge ab und meldet diese weiter. Zur Einsparung von Zeit und Kosten ist bekannt, ferngesteuerte Abfragen statt der personengebundenen Ablesung durchzuführen. Hierzu werden die Stromzähler an ein Netzwerk angeschlossen, über das sie angesteuert und abgefragt werden können.

So beschreibt die US 2003/0009301 A1 ein System mit einem Zähler, der über drahtlose Kommunikation mit einem entfernten Steuergerät verbunden ist. Der Zähler speichert Verbrauchsdaten ab. Das Steuergerät steht mit dem Zähler bzw. einer Mehrzahl von weiteren Zählern in einem größeren Umfeld des Zählers in Verbindung. Die Reichweite des Steuergeräts, z.B. 100 m, ist etwas geringer als die Ausdehnung des besagten Gebiets. Die weiteren Zähler sind in Kommunikationsreichweite miteinander und stehen so direkt oder indirekt mit dem Steuergerät in Verbindung, selbst wenn sich einzelne Zähler außerhalb der unmittelbaren Reichweite des Steuergeräts befinden. Das Steuergerät wiederum ist über ein globales Informationsnetzwerk, etwa dem Internet oder einer Telefonleitung, mit einem Server verbunden. Am Ende bestimmter Abrechnungszeiträume, üblicherweise zum Monatsende, fordert das Steuergerät die Verbrauchsinformationen an und erhält diese, die z.B. verschlüsselt vom Zähler zum entfernten Steuergerät gesendet werden. Das Steuergerät stellt eine bidirektionale Kommunikation mit dem Server über das globale Informationsnetzwerk her, so dass der Nutzer sich auf dem Server authentifizieren und die Bezahlung seines Verbrauchs des Versorgungsmediums initiieren kann. Sind sehr viele Nutzer angeschlossen, die zum gleichen Zeitpunkt mit dem Server kommunizieren wollen, muss dieser für das Auftreten solcher Spitzenlasten ausreichende Ressourcen aufweisen.

Aus der DE 699 25 274 T2 ist ein Verbindungsverfahren für Internetdienste bekannt, bei dem unter anderem auch die Anwendung von Internetdiensten zur Zählwerterfassung vorgeschlagen wird. Das System weist eine Master- und Slave-Architektur zum Initiieren des Empfangs von sicheren Internetnachrichten von verschiedenen Knoten auf. Jeder Knoten kann systematisch vom Server abgefragt werden. So kann an einem Remoteknoten der Energieverbrauch von einem Hauptstromversorgungsnetz gemessen und für Bezieher eine angemessene Zahlung gemäß autorisierten vorprogrammierten Gebühren berechnet werden. Die automatisierte Fern-Zählwerterfassung und das Fernsteuerprotokoll sind zum Kommunizieren zwischen Remoteknoten und einem onlinebasierten Datenbank-Webserver, etwa die Schnittstelle eines öffentlichen Versorgungsbetriebs, durch Datenbeschaffungseinheiten, die Protokollumwandlung unterstützen, bestimmt. Ein Internetbrowser kann die Vorrichtungen in Haushalten und Unternehmen über den Server des Versorgungsbetriebes und die Slaveknoten unter Verwendung des virtuellen Links überwachen und steuern.

Aus dem Prospekt der IMT-Information Management Technology AG: Mini Web Interface T10, 10. Juli 2000 ist ein integrierter Webserver auf einer Platine bekannt, der z.B. zur Überwachung des Energieverbrauchs und zum Daten-Logging, etwa bei zu Zwecken der Energie-Verbrauchserfassung, eingesetzt werden kann.

Die Veröffentlichung von Dr. Klaus Steiner: "Schlüsselfertige Projekte der Zählerfernauslesung", S. 243-247, in GWF Gas Erdgas 144 (2003), Nr. 4 offenbart ein Fernabfragesystem zur zeitnäheren Erfassung von abrechnungsrelevanten Versorgungsmedienmengen. Dazu erfolgt ein Datenabruf in der Fernabfrageinfrastruktur. Durch den online-Zugriff auf die Messstellen ist eine höhere Ablesefrequenz möglich. So können Zählerstände im Viertelstundenrhytmus aufgezeichnet werden und mit einer einmaligen Übertragung an die Zentrale weitergeleitet werden.

Aus der US 2004/186672A1 ist ein System zur Erfassung von Versorgungsmedienmengen bekannt, die eine nutzerseitige Einrichtung zur nutzerseitigen Mengenerfassung eines Versorgungsmediums und eine anbieterseitige Einrichtung zur Erfassung von versorgungsmedienbezogenen Daten der nutzerseitigen Einrichtung aufweist. Nutzerseitig ist eine Zählereinrichtung vorgesehen, welche den Verbrauch des Versorgungsmediums erfasst. Die nutzerseitige Einrichtung und die anbieterseitige Einrichtung stehen zeitweise in Kommunikationsverbindung. Die Zählereinrichtung dient zur Erfassung und Weitergabe von zeitgenauen Verbrauchswerten und ist mit der nutzerseitigen und anbieterseitigen Einrichtung über einen Kommunikationskanal gekoppelt. Mit der Zählereinrichtung ist ein Kommunikationsmodul vorgesehen, das aktiv eine Kommunikation mit der anbieterseitigen Einrichtung aufbauen kann und die Verbrauchsdaten übermitteln kann.

Auch die WO 00/00935 A und GB-A-2302 952 offenbaren ein derartiges System uir Erfassung von Versorgungsmedien.

Aufgabe der Erfindung ist es, ein kundenfreundliches Versorgungsmedienmengenerfassungssystem zu schaffen, das für eine große Vielzahl an Nutzern geeignet ist, ohne die Ressourcen auf Anbieterseite übermäßig zu belasten. Weiterhin ist ein Verfahren zum Betreiben desselben anzugeben.

Die Aufgabe wird erfindungsgemäß durch die Merkmale der unabhängigen Ansprüche gelöst. Günstige Ausgestaltungen und Vorteile der Erfindung ergeben sich aus den weiteren Ansprüchen und der Beschreibung.

Das erfindungsgemäße Versorgungsmedienmengenerfassungssystem umfasst, eine nutzerseitige Einrichtung zur nutzerseitigen Mengenerfassung wenigstens eines Versorgungsmediums und eine anbieterseitigen Einrichtung zur Erfassung von versorgungsmedienbezogenen Daten der nutzerseitigen Einrichtung, wobei nutzerseitig wenigstens eine Zählereinrichtung für das wenigstens eine Versorgungsmedium vorgesehen ist, wobei die anbieterseitige Einrichtung und die nutzerseitige Einrichtung wenigstens zeitweise in Kommunikationsverbindung stehen. Es wird vorgeschlagen, dass die wenigstens eine Zählereinrichtung zur Erfassung und Weitergabe von zeitgenauen Werten eines Verbrauchs und/oder einer nutzerseitigen Einspeisung eines Versorgungsmediums ausgebildet ist und mit der nutzerseitigen und/oder der anbieterseitigen Einrichtung über einen Kommunikationskanal gekoppelt ist. Die zeitgenaue Übermittlung erfolgt bevorzugt in deutlich kürzeren Abständen als eine monatliche Übermittlung des Verbrauchs und/oder der Einspeisung.

Die Verfügbarkeit von zeitaktuellen Daten, z.B. sekundengenau, minutengenau, etc., erlaubt sowohl auf der Nutzerseite als auch auf der Anbieterseite einen weiten Gestaltungsspielraum. So kann der Nutzer z.B. seinen Stromverbrauch kontinuierlich beobachten und sich jederzeit informieren, wie viel elektrische Leistung und gegebenenfalls zu welchem Preis gerade von ihm abgenommen wird. Er kann seinen Verbrauch gezielt zeitlich verändern, um unnötige Lastspitzen zu vermeiden und erhält gleichzeitig die Möglichkeit, den Erfolg derartiger Maßnahmen zu verfolgen. Der Anbieter kann flexible Tarife anbieten und dem Nutzer aktuell übermitteln. Weiterhin kann der Anbieter dem Kommunikationsmodul Aktualisierungen von Software und/oder Funktionsparametern übermitteln. Vorteilhaft bietet das Kommunikationsmodul die Möglichkeit, etwa nach einer Störung in einem Gebiet beispielsweise ein abruptes Zuschalten einer Vielzahl von Verbrauchern so zu steuern, dass eine Überlastung vermieden werden kann. Ebenso können bei einem stark erhöhten Verbrauch in einem Gebiet einzelne Verbraucher mit spezifisch hohem Verbrauch gezielt vorübergehend vom Netz genommen werden, wenn diese Verbraucher unkritisch sind, wie etwa Wäschetrockner, Tiefkühlgeräte oder dergleichen und gegebenenfalls entsprechend gezielt zeitlich verzögert wieder zugeschaltet werden. Ein Versorgungsnetz, z.B. ein Stromnetz einschließlich der dieses versorgenden Kraftwerke, muss heute derartige Lastspitzen vorhalten und in seiner Kapazität entsprechend groß dimensioniert werden, obwohl der integrale Verbrauch deutlich geringer ist. Ein zeitliches Entzerren von Verbrauchsspitzen bietet ein hohes Kosteneinsparungspotenzial ebenso wie, etwa bei der Stromversorgung, eine Reduktion von Emissionen durch den möglichen Einsatz kleinerer Kraftwerke. Ebenso kann eine Einspeisung von durch Windkraft, Solarenergienutzung und dergleichen gewonnene elektrische Energie durch die Versorgungsmedienmengenzählereinrichtung erfasst werden und durch das Kommunikationsmodul zeitgenau dem Nutzer und/oder dem Anwender mitgeteilt werden.

Vorteilhaft kann die Zählereinrichtung einen Zähler und ein Kommunikationsmodul umfassen, wobei der Zähler lokal mit dem Kommunikationsmodul gekoppelt ist und das Kommunikationsmodul im Datenaustausch mit dem Kommunikationskanal steht. Alternativ kann die Zählereinrichtung einen Zähler, ein Kommunikationsmodul und einen Kommunikationskanal umfassen, wobei die Zählereinrichtung lokal mit dem Kommunikationsmodul gekoppelt ist und das Kommunikationsmodul zum Datenaustausch mit dem Kommunikationskanal gekoppelt ist. Das Kommunikationsmodul dient allgemein als Plattform für einen Transfer von Daten zwischen einem zählerspezifischen Datenprotokoll, der z.B. Messdaten eines Industriezählers entsprechend einem Industrieprotokoll, und einem Protokoll, welches für den Kommunikationskanal geeignet ist, vorzugsweise ein IP-Protokoll (Internetprotokoll). Das Kommunikationsmodul dient weiterhin der Datenverarbeitung von vom Zähler erfassten Verbrauchsdaten und/oder eingespeisten Mengen des Versorgungsmediums und der Zwischenspeicherung dieser Daten. Weiterhin dient das Kommunikationsmodul der Darstellung der Daten von Verbrauch und/oder Einspeisung sowie einer Zertifizierung von gesendeten Datenpaketen für eine gesicherte Datenübertragung zwischen der anbieterseitigen und nutzerseitigen Einrichtung. Weiterhin dient das Kommunikationsmodul einer Fernparametrierung des Zählers bzw. der Zähleinrichtung und ermöglicht ein Einwirken der Anbieterseite auf Lastspitzen. Das Kommunikationsmodul kann ferner der Zeitsynchronisation dienen, um Schaltzeiten in der Zähleinrichtung mit einer gesetzlichen Zeit (z.B. gesetzlicher Zeitstandard der Physikalisch Technischen Bundesanstalt PTB in Braunschweig) zu synchronisieren.

Der Zähler und das Kommunikationsmodul können in einer baulichen Einheit zusammengefasst sein. Ebenso kann der Kommunikationskanal mit in die Einheit integriert sein. Dabei können die Komponenten fest installiert sein. Es ist jedoch auch vorteilhaft, wenn das Kommunikationsmodul in einem für einen Nutzerzugriff vorgesehenen Bereich der Zählereinrichtung lösbar, insbesondere austauschbar, mit dem Zähler gekoppelt ist. So kann der Zähler mit einem Kommunikationsmodul nachgerüstet werden, oder ein vorhandenes Kommunikationsmodul kann gegen ein anderes mit anderen Spezifikationen getauscht werden. Für den Nutzerzugriff vorgesehen ist ein Bereich, der gefahrlos zugänglich ist und für den kein Wartungspersonal notwendig ist, z.B. wenn das Kommunikationsmodul mit einem Datenkabel mit einer Datenbuchse des Zählers verbunden werden kann und außerhalb des Zählergehäuses angebracht wird oder wenn das Kommunikationsmodul z.B. bei einem Stromzähler in einem Niederspannungsbereich außerhalb gefährlicher Spannungen und eichpflichtiger Einrichtungen mit dem Zählergehäuse verbunden werden kann.

Vorteilhaft kann die Zählereinrichtung als Webserver konfiguriert sein. Bevorzugt kann das Kommunikationsmodul wenigstens einen Webserver umfassen und insbesondere eine Webseite für die nutzerseitige Einrichtung bereitstellen. Über diese Webseite kann der Nutzer bequem Verbrauchsdaten abfragen und verfolgen. Dies kann über einen PC (Computer) erfolgen oder auch über eine separate Anzeigeeinheit, etwa einen kleinen tragbaren Computer wie einen PDA (PDA = Personal Digital Assistant), oder auch ein Mobiltelefon. Der Webserver dient zur Übermittlung von Daten, die vorzugsweise in kurzen Abständen Verbrauchsdaten lokal für den Nutzer bereitstellen. Beispielsweise kann eine Kommunikation über das Ethernet erfolgen, mit einem Fertigungstest-PC bei einem Hersteller oder Anbieter und/oder einem Installateur-PC und oder einem Heim-PC des Nutzers und/oder einer lokalen Anzeigeinheit zur Anzeige von aktuellen Verbrauchswerten und/oder einem Vermittlungsgerät (Gateway) eines Anbieters eines Versorgungsmediums wie Strom, Wasser, Gas etc. und/oder einem Zeitserver eines Anbieters eines Zeitstandards. Die Kommunikation soll eine Fertigungsunterstützung und/oder eine Konfiguration des Kommunikationsmoduls und/oder eine Anzeige der Leistung pro Zeiteinheit und/oder eine Übertragung von Zählermesswerten zur Abrechnung und Darstellung und/oder eine Synchronisation der Verbrauchsmengenerfassungseinheit mit einer gesetzlichen Zeit (PTB) und/oder ein Update von Parametern und/oder ein Update von Software und oder eine Fehleranalyse des Kommunikationsmoduls durch den Anbieter ermöglichen.

Das Kommunikationsmodul kann neben dem Webserver mit Webseiten für eine Konfiguration durch den Verbraucher vorteilhaft umfassen: einen Webserver mit Webseiten für die Fertigung, Tests etc. und/oder einen Webserver mit Webseiten für eine Konfiguration durch einen Installateur und/oder einen Webserver mit Webseiten für eine Anzeige der Leistung pro Sekunde (InstantView) und/oder einen NTP-Client für eine Zeitabfrage bei einem Anbieter eines Zeitstandards, z.B. der PTB und/oder einen Webclient (Push-Dienst) für die Zählerwertübertragung, Updates und Fehleranalyse.

Vorteilhaft kann die Zählereinrichtung als Webclient konfiguriert sein. Bevorzugt kann das Kommunikationsmodul einen Webclient mit einem Push-Dienst umfassen. Der Push-Dienst dient bevorzugt zur Übermittlung von zweiten Daten, bevorzugt Zählerwertübertragung und/oder Parameter- und/oder Programm-Aktualisierungen (Updates) und/oder Fehlermeldungen. Bei dem Push-Dienst verläuft die Kommunikation überwiegend in eine Richtung, nämlich vom Kommunikationsmodul zur anbieterseitigen Einrichtung. Als Webclient nimmt das Kommunikationsmodul mit einem Server des Anbieters (oder mehreren Anbietern) Verbindung auf und tauscht Nachrichten mit diesem aus. Der Client ist bei der Datenübertragung für die Kontaktaufnahme verantwortlich und bestimmt deren Zeitpunkt. Die zweiten Daten werden vorzugsweise periodisch in einem deutlich größeren Zeitabstand übermittelt, etwa viertelstündlich oder halbstündlich, als die ersten Daten, die z.B. im Abstand weniger Sekunden für den Nutzer bereitgestellt werden. Im Prinzip kann eine Verbrauchsabrechung minutengenau oder sogar sekundengenau erfolgen. Teilt der Anbieter über das Kommunikationsmodul einen aktuell gültigen Tarif, etwa Hochtarif oder Niedrigtarif mit, kann der Nutzer sich sofort lokal über die Kosten seines Verbrauchs informieren. Besonders vorteilhaft können insbesondere auch zeitvolatile Tarife, etwa Stundentarife, als Prognose für den nächsten Tag übermittelt werden. Für den Nutzer eröffnet sich so die Möglichkeit, wenigstens einen Teil seines Energieverbrauchs zeitlich so zu planen, dass er von voraussichtlich günstigen Tarifen profitieren kann, wenn er etwa ein Gerät je nach Prognose später oder früher einschaltet. Umgekehrt hat der Anbieter die Möglichkeit, Ressourcen besser planen zu können und unnötige Überkapazitäten zu vermeiden. Die verbraucherseitige Einrichtung kann die übermittelten Daten ebenfalls auf einer Webseite darstellen und dem Nutzer, z.B. über eine Internetverbindung, zugänglich machen. Ebenso ist denkbar, derartige Informationen über einen Pager-Dienst oder über SMS (short message service) zu erhalten. Über eine geeignete Authentifizierung kann der Nutzer gegebenenfalls auch von extern auf die Webseite zugreifen und sich, etwa im Urlaub, über den aktuellen Verbrauch in seinem Haushalt informieren.

Das Kommunikationsmodul weist dazu geeignete Komponenten wie Speicher, ein oder mehrere Prozessoren, Software, Schnittstellen und dergleichen auf. Dadurch bietet sich die Möglichkeit, eine eigenständige Kommunikation mit der anbieterseitigen Einrichtung aufzubauen, die eine individuelle Datenübertragung ermöglicht und die unabhängig von Spitzenlastzeiten arbeiten kann, sowie eine nutzerfreundliche Bedienung und Anwendung zu schaffen. Eine Bereitstellung der Verbrauchsdaten für die anbieterseitige Einrichtung kann nach dem so genannten "Push"-Prinzip erfolgen, indem die Zählereinrichtung "redet" und die Datenübertragung anstößt. Im Stand der Technik wird dagegen das so genannte "Pull"-Prinzip eingesetzt, bei dem die anbieterseitige Einrichtung die Daten bei dem Verbraucher abholt. Sendet die Zählereinrichtung dagegen aktiv Daten an die anbieterseitige Einrichtung, kann diese auf die Übertragung antworten und, da dies als Antwort erfolgt, legitim eine nutzerseitige Firewall des lokalen Netzwerks überwinden. So können z.B. neue Programmversionen für das Kommunikationsmodul und/oder die Zählereinrichtung auf diesem Weg übertragen werden. Bei einer Abfrage nach dem "Pull"-Prinzip müsste dagegen die Firewall für den Abfragenden bei jeder Zählereinrichtung explizit freigeschaltet werden, was den Nutzer leicht überfordern kann, besonders wenn die anbieterseitige Einrichtung einen Massenmarkt mit Millionen Nutzern versorgt. Weiterhin kann die nutzerseitige Einrichtung mit anbieterseitigen Einrichtungen einer Mehrzahl von Anbietern gekoppelt sein, die gleiche oder unterschiedliche Verbrauchsmedien bzw. Versorgungsmedien zur Verfügung stellen.

Vorteilhaft kann die Zähleinrichtung in ein lokales Netzwerk (LAN) in der nutzerseitigen Einrichtung eingebunden sein. So kann der Nutzer mit einem Heimcomputer auf die Zähleinrichtung zugreifen und z.B. Daten vom Kommunikationsmodul abfragen. Ebenso können über das lokale Netzwerk Verbrauchsdaten und/oder Einspeisungsdaten an eine lokale Anzeigeeinheit übertragen werden.

Günstigerweise kann der Kommunikationskanal wenigstens ein Mitglied aus der Gruppe PLC, LAN. WLAN, GSM, GPRS, UMTS, DECT, WIMAX, DSL, Router, Modem, Telefonleitung umfassen, wobei PLC für Homeplug oder Power Line Communications steht, bei dem Daten über Stromleitung übertragen werden, LAN und WLAN für ein kleines drahtgebundenes bzw. drahtloses Netzwerk steht, GSM für Global System for Mobile Communications, einen Standard für volldigitale Mobilfunknetze, GPRS für General Packet Radio Service, einen paketorientierten Übertragungsdienst im Mobilfunk, steht, UMTS für Universal Mobile Telecommunications Systems, einem Mobilfunkstandard mit deutlich höherer Datenrate als GSM, steht, DECT für Digitally Enhanced Cordless Telecommunications, einem Standard für schnurlose und Mobiltelefone sowie für kabellose Datenübertragung im Allgemeinen, steht, WIMAX für Worldwide Interoperability for Microwave Access steht, einem Synonym für den Standard IEEE 802.16, mit dessen Techhnik breitbandige Zugänge z.B. zum Internet via Funknetz angeboten werden, und DSL für Digital Subscriber Line, eine breitbandige digitale Internetverbindung über Telefonnetze, steht. Selbstverständlich sind auch andere Kommunikationskanäle und auch künftige Kommunikationskanäle möglich.

Gemäß einer vorteilhaften Ausgestaltung kann der Kommunikationskanal z.B. eine Telefonleitung und/oder einen DSL-Router umfassen und bevorzugt an ein externes Netzwerk (Internet) gekoppelt sein. Der Nutzer stellt vorzugsweise den Internetzugang mit einem Breitband-Internetzugang, etwa einem DSL-Zugang, sowie einen Router, vorzugsweise einen Ethernet-Router, während anbieterseitig lediglich Zusatzteile für dessen lokales Netzwerk bereitgestellt werden. Der Router lässt zweckmäßigerweise anbieterseitig notwendige Protokolle zu, etwa https- und ntp-Protokolle oder optional auch upnp. Https (https=Hypertext Transfer Protocol Secure) dient zur Verschlüsselung und zur Authentifizierung der Kommunikation zwischen Webserver und Browser im World Wide Web (Internet). Ntp (ntp=Network Time Protocol) ist ein Protokoll zur Zeitsynchronisation zwischen Computern. Upnp (upnp=Universal Plug and Play) dient zur herstellerübergreifenden Ansteuerung von Geräten, z.B. von Routern über ein IPbasierendes Netzwerk, mit oder ohne zentrale Kontrolle durch ein Gateway. Es basiert auf einer Reihe von üblicherweise standardisierten Netzwerkprotokollen und Datenformaten. Durch die nutzerseitige Bereitstellung können aufwändige bauliche Maßnahmen, wie Aufstemmen von Wänden und Decken zum Verlegen von ansonsten notwendigen Kommunikationsleitungen unterbleiben.

Vorteilhaft kann der wenigstens eine Zähler zur Erfassung eines Stromverbrauchs, eines Gasverbrauchs oder eines Wärmeverbrauchs, eines Wasserverbrauchs, eines Brennstoffverbrauchs ausgebildet sein bzw. zur Erfassung einer Einspeisung solcher Versorgungsmedien. Das Kommunikationsmodul kann bei allen Zählertypen dieselben Funktionalitäten aufweisen.

In einer günstigen Ausgestaltung des Versorgungsmedienmengenerfassungssystems kann eine Mehr-ahl von Zählern, die unterschiedliche Versorgungsmedien erfassen, vorgesehen sein. In der nutzerseitigen Einrichtung ist durch eine derartige Kombination ein vorteilhaftes und für den Nutzer leicht überschaubares und nachvollziehbares Energiemanagement möglich. Ebenso kann eine Verbrauchsabrechnung und/oder Einspeisungsabrechnung der unterschiedlichen Medien vorteilhaft einfach und mit geringem Aufwand erfolgen. Auf diese Weise lässt sich die Energieeffizienz beispielsweise eines Haushalts bequem und zuverlässig bestimmen und gegebenenfalls optimieren.

Es können wenigstens zwei Zähler mit jeweils mit einem eigenen Kommunikationsmodul gekoppelt sein. So können auch alle vorhandenen Zähler jeweils mit einem eigenen Kommunikationsmodul gekoppelt sein. Üblicherweise sind die Zähler etwa in einem Haushalt eng benachbart, so dass eine Kopplung der Zähler über drahtgebundene oder drahtlose Kommunikation auf einfache Weise möglich ist. Beispielhaft kann z.B. ein Gaszähler mit dem Kommunikationsmodul gekoppelt werden, wobei ein Verbrauchswert von Gas erfasst, in elektrische Signale umgesetzt und dem Kommunikationsmodul zugeführt wird. Dabei kann z.B. ein Stromzähler und ein Gaszähler vorgesehen sein, die beide auf dasselbe Kommunikationsmodul zugreifen. Für jeden Zähler könnte im Kommunikationsmodul z.B. ein eigener Webserver vorgesehen sein; jeder Zähler könnte einzeln betrachtet werden, oder auch zur Betrachtung eines Energiemanagements des Nutzers kombiniert werden.

Besonders vorteilhaft ist, wenn eine Mehrzahl, bevorzugt alle, von Zählern in der nutzerseitigen Einrichtung mit einem gemeinsamen Kommunikationsmodul gekoppelt sein kann. Das Kommunikationsmodul kann entsprechende Prozessoren, Speicher und dergleichen für verschiedene Zählertypen aufweisen.

Eine weitere günstige Ausgestaltung ist, wenn die Zählereinrichtung zur Erfassung einer eingespeisten Menge von wenigstens einem Versorgungsmedium ausgebildet sein kann, das nutzerseitig in eine Verbrauchsmedienversorgung einspeisbar ist. So kann bekanntermaßen von Nutzerseite her durch Solarenergienutzung und/oder Windenergiegewinnung Strom in ein Versorgungsnetz eingespeist werden. Die eingespeiste Menge ("negativer Verbrauch") kann über einen üblichen Zähler erfasst werden und die eingespeiste Menge über das Kommunikationsmodul dem Nutzer wie auch dem Anbieter zeitgenau mitgeteilt werden. Auch hier ist ein zeitgenaues Monitoring wie auch eine zeitgenaue Abrechnung möglich.

Im lokalen Netzwerk können Verbrauchsdaten über das Kommunikationsmodul abrufbar sein, was z.B. mit der versorgungsmedienmengenerfassungseinheitseigenen Webseite besonders komfortabel ist. Die Daten können optional auf einer an den Zähler gekoppelten Verbrauchsanzeige dargestellt sein, welche z.B. über das lokale Netzwerk Daten der Zählereinrichtung erhält und die in der nutzerseitigen Einrichtung beliebig vom Nutzer platziert werden kann.

Bei einem erfindungsgemäßen Verfahren zum Betreiben eines Versorgungsmedienmengenerfassungssystems, insbesondere wie vorstehend beschrieben, mit einer nutzerseitigen Einrichtung zur Mengenerfassung wenigstens eines Versorgungsmediums und einer anbieterseitigen Einrichtung zur Erfassung von Daten der nutzerseitigen Einrichtung, wobei nutzerseitig wenigstens eine Zählereinrichtung wenigstens nutzerseitige Daten eines Versorgungsmediums erfasst, wobei die anbieterseitige Einrichtung und die nutzerseitige Einrichtung wenigstens zeitweise in Kommunikationsverbindung stehen, erfasst die wenigstens eine Zählereinrichtung Werte eines Verbrauchs und/oder einer nutzerseitigen Einspeisung des Versorgungsmediums und gibt diese weiter. Bei der Weitergabe werden zeitgenaue Daten übermittelt, wobei die nutzerseitige und die anbieterseitigen Einrichtung drahtlos oder drahtgebunden in Kommunikationsverbindung mit der Zählereinrichtung stehen. Wie bereits erwähnt, ist die Verfügbarkeit von zeitaktuellen Daten, z.B. sekundengenau, minutengenau, etc., sehr vorteilhaft. Sie erlaubt sowohl auf der Nutzerseite als auch auf der Anbieterseite einen weiten Gestaltungsspielraum. Der Nutzer kann seinen jeweiligen aktuellen Verbrauch kontinuierlich beobachten und sich jederzeit über Verbrauch und gegebenenfalls Kosten informieren; ebenso kann dies bei einer Einspeisung eines Versorgungsmediums erfolgen. Der Anbieter kann flexible Tarife anbieten und dem Nutzer aktuell übermitteln. Eine bessere und gleichmäßigerer Verbrauch etwa von Strom und anderen Versorgungsmedien kann erreicht werden.

In einem bevorzugten Verfahrensschritt kann ein Kommunikationsmodul der Zählereinrichtung verbrauchsabhängige Daten wenigstens eines Zählers in ein Kommunikationsprotokoll umsetzen, das von einem angekoppelten Kommunikationskanal benutzt wird. So können Daten des Zählers über einen leicht zugänglichen Kommunikationskanal übertragen werden und mit gängigen Techniken verwertet werden. Dabei ist grundsätzlich eine Kommunikation von der anbieterseitigen Einrichtung, etwa zur Übermittlung von Programmaktualisierungen, zum nutzerseitigen Einrichtung möglich und umgekehrt.

Das Kommunikationsmodul kann gemäß einem bevorzugten Verfahrensschritt aktiv eine Kommunikation mit der anbieterseitigen Einrichtung aufbauen. Bevorzugt kann die Kommunikation mit der anbieterseitigen Einrichtung dabei überwiegend ausgehend von der nutzerseitigen Einrichtung zur anbieterseitigen Einrichtung erfolgen. Eine Bereitstellung der Verbrauchsdaten und/oder Einspeisungsdaten oder von Softwareaktualisierungen für die nutzerseitige Einrichtung kann nach dem so genannten "Push"-Prinzip erfolgen, indem die Zählereinrichtung die Datenübertragung anstößt. Sendet die Zählereinrichtung Daten, etwa Verbrauchsdaten oder auch Fehlerzustände, an die anbieterseitige Einrichtung, kann diese auf die Übertragung antworten und, da dies als Antwort erfolgt, legitim eine nutzerseitige Firewall des lokalen Datennetzes überwinden, um etwa neue Programmversionen für das Kommunikationsmodul und/oder die Zählereinrichtung zu übertragen. Damit kann in der Regel eine explizite Freischaltung der Nutzerfirewall für den Abfragenden bei jeder Zählereinrichtung unterbleiben, die bei einer Abfrage nach dem "Pull"-Prinzip erfolgen müsste. Besonders dann, wenn die anbieterseitige Einrichtung einen Massenmarkt mit Millionen Nutzern versorgt, ist dies eine kundenfreundliche Möglichkeit der Bereitstellung solcher Programme und dergleichen für eine große und häufig technisch wenig bewanderte Kundenzahl. Ist ein solches lokales Datennetz verfügbar, entfällt eine separate Freischaltung des Anbieters. Auch bei einer Veränderung des lokalen Datennetzes, z.B. durch Austausch von Hardware, entfällt eine Anpassung, wenn die anbieterseitige Einrichtung Daten stets nur als "return message" sendet. Der Nutzer behält die Kontrolle über das System.

Kann eine Kommunikation seitens der anbieterseitigen Einrichtung nur als Antwort auf eine erfolgte Kontaktaufnahme des Kommunikationsmoduls mit der anbieterseitigen Einrichtung erfolgen, kann bei einer Kommunikation über das Internet vorteilhaft eine nutzerseitige Firewall (Netzwerk-Schutzeinrichtung insbesondere eines nutzerseitigen Routers), welche unberechtigte Zugriffe auf das lokale Netzwerk abblocken soll, für die anbieterseitige Einrichtung dann durchlässig sein, wenn diese auf eine Mitteilung des Kommunikationsmoduls antwortet. Die als Antwort gesendete Nachricht ist automatisch autorisiert, die Firewall zu überwinden. Eine separate Freischaltung auf der Nutzerseite kann entfallen, was bei einer Nutzeranzahl im Millionenbereich in erheblichen Vereinfachungen für Nutzer und Anbieter resultiert.

Die Kommunikation mit der anbieterseitigen Einrichtung kann bevorzugt ganz überwiegend von der nutzerseitigen Einrichtung zur anbieterseitigen Einrichtung erfolgen. In diesem Fall "redet" die Versorgungsmedienmengenerfassungseinheit; der Nutzer hat die Möglichkeit, die Kommunikation zu steuern.

Gemäß einer günstigen Weiterentwicklung kann eine Kommunikation seitens der anbieterseitigen Einrichtung mit der nutzerseitigen Einrichtung abhängig von Betriebsbedingungen eines Versorgungsnetzes erfolgen. So kann bei einer Störung etwa im Stromnetz verhindert werden, dass nach Beheben der Störung schlagartig eine Vielzahl von Verbrauchern zugeschaltet werden, die unkritisch auch zeitversetzt zugeschaltet werden können. Ebenso kann bei einem stark belasteten Stromnetz gezielt ein Lastabwurf erfolgen, indem vorübergehend Verbraucher vom Netz genommen werden, die dann später wieder angeschlossen werden. Die anbieterseitige Einrichtung kann über das Kommunikationsmodul gezielt verbraucherindividuelle Anweisungen an die nutzerseitige Einrichtung übermitteln. Auf diese Weise kann z.B. einem Zusammenbrechen der Versorgung vorgebeugt werden. Ebenso kann entsprechend bei einer Einspeisung von Versorgungsmedien bei ungünstigen Betriebsbedingungen eine schädliche Auswirkung auf das Versorgungsnetz vermieden werden.

Das Kommunikationsmodul kann wiederholt in ersten, kurzen Zeitabständen erste Daten und in zweiten, längeren Zeitabständen zweite Daten senden. Vorzugsweise können die zweiten Daten an die anbieterseitige Einrichtung gesendet werden. Aus den zweiten Daten kann die anbieterseitige Einrichtung z.B. eine Abrechnung für den Verbrauch erstellen und/oder einen Verbrauch dem Nutzer über eine für ihn spezifische anbieterseitige Webseite zugänglich machen.

Kann das Kommunikationsmodul mit einem nutzerseitigen lokalen Netzwerk kommunizieren, können die ersten Daten zur zeitgenauen Darstellung des aktuellen Verbrauchs genutzt werden. Dazu können günstigerweise Verbrauchsdaten, Einspeisungsdaten und/oder Verbrauchsspezifikationen auf einer zählereinrichtungsspezifischen Webseite dargestellt werden. Bei bevorzugten Datenflüssen benutzt der Nutzer eine lokale Applikation in seinem Nutzer-PC oder einer mobilen Anzeigeeinheit. Die lokale Applikation sucht das Kommunikationsmodul z.B. per unpn oder slp (slp=Service Location Protocol). Die lokale Applikation kann per http-Request die aktuellen Leistungsdaten von einem Webserver innerhalb des Kommunikationsmoduls abrufen. Der Webserver innerhalb des Kommunikationsmoduls liefert Daten als eine textformatierte Tabelle von Werten an den PC/mobilen Anzeigeeinheit ab, wobei eine graphische Aufbereitung in der lokalen Applikation erfolgt.

Bei einer Störung der Kommunikation mit der anbieterseitigen Einrichtung die ersten und/oder zweiten Daten gepuffert werden. Ist die Störung behoben, können alle Daten, vorzugsweise die aktuellen zuerst, an die anbieterseitige Einrichtung gesendet werden.

Einen schönen Vorteil bietet die Möglichkeit, dass nutzerseitige Schwellwerte für einen Verbrauch und/oder eine Einspeisung des Versorgungsmediums vorgegeben werden können. Über die zeitaktuellen Daten, die vom nutzerseitigen Einrichtung übermittel werden, können im anbieterseitigen Web-Portal z.B. die zeitgenauen Verbrauchsdaten ausgewertet werden und der Nutzer bei Überschreiten einer oberen Schwellwerts oder bei Unterschreiten eines unteren Schwellwerts eine Nachricht mittels Email, SMS, Telefon etc. erhalten. So kann sich der Nutzer bei Abwesenheit alarmieren lassen, wenn plötzlich höhere Leistungswerte als erwartet abgenommen werden (Einbrecher, defekte Elektrogeräte, Energiediebstahl etc.), oder Verbraucher, die eingeschaltet sein müssten, nicht mehr funktionieren (Kühlaggregate, Aquarienpumpen etc.). Dies wird möglich, da die Daten aktuell im Web-Portal zur Verfügung stehen und dort verarbeitet werden.

Gemäß einer vorteilhaften Weiterbildung können mehrere Zähler unterschiedliche Versorgungsmedien erfassen und Verbrauchsdaten und/oder Einspeisungsdaten an die anbieterseitige Einrichtung übermitteln. Dabei können mehrere der Zähler die Daten unabhängig voneinander übermitteln oder alternativ und kostengünstig die Zähler Daten über ein gemeinsames Kommunikationsmodul übermitteln.

Vorteilhaft ist weiterhin eine Zählereinrichtung für ein Versorgungsmedienmengenerfassungssystem mit einer nutzerseitigen Einrichtung zur Mengenerfassung eines Versorgungsmediums und einer anbieterseitigen Einrichtung zur Erfassung von nutzerseitigen Versorgungsmedien-Daten, wobei ein an einen Zähler angekoppeltes Kommunikationsmodul vorgesehen ist, das als Webserver konfiguriert ist.

Bevorzugt kann das Kommunikationsmodul als Webclient mit einem Push-Dienst konfiguriert sein. Das Kommunikationsmodul kann mit dem Zähler in eine bauliche Einheit integriert sein oder auch lösbar mit diesem verbunden sein.

Vorzugweise kann das Kommunikationsmodul mit einem nutzerseitigen lokalen Netzwerk kommunizieren. Der Nutzer kann über das lokale Netzwerk auf das Kommunikationsmodul bzw. die Zählereinrichtung zugreifen. Ferner kann das Kommunikationsmodul mit einer oder mehreren Anzeigeeinrichtungen kommunizieren, von der bzw. denen der Nutzer Verbrauchswerte ablesen kann. Denkbar ist auch eine Übertragung von Daten zu der Anzeigeeinheit, z.B. über eine so genannte Powerline, bei der Daten auf eine vorhandene Stromleitung aufmoduliert sind und die Stromleitung zur Übertragung von Daten verwendet wird.

Besonders vorteilhaft können Verbrauchsdaten und/oder Einspeisungsdaten und/oder Verbrauchsspezifikationen auf einer zählereinrichtungseigenen Webseite dargestellt werden.

Gemäß einer günstigen Weiterbildung kann eine transaktionsorientierte Bepreisung des nutzerseitigen Verbrauchs und/oder der nutzerseitigen Einspeisung des Versorgungsmediums erfolgen. Dies wird durch die zeitgenaue Übermittlung des Verbrauchs und/oder der Einspeisung des Versorgungsmediums oder mehrerer Versorgungsmedien an die anbieterseitige Einrichtung möglich, die entsprechend geltender Tarife bepreist werden können, gegebenenfalls auch mit zeitgenauen Preisen.

Eine bevorzugte Zählereinheit zeichnet sich durch eine Ausgestaltung zur Erfassung von zeitgenauen Werten eines Verbrauchs und/oder einer nutzerseitigen Einspeisung des wenigstens einen Versorgungsmediums und einer Kopplungsmöglichkeit mit der nutzerseitigen und/oder der anbieterseitigen Einrichtung über einen Kommunikationskanal. Die Zählereinrichtung kann als Webserver konfiguriert sein. Ebenso kann die Zählereinrichtung als Webclient konfiguriert sein.

Die Erfindung ist nachfolgend beispielhaft, ohne Beschränkung der Allgemeinheit, anhand von eines in Zeichnungen dargestellten Ausführungsbeispiels näher erläutert.

Es zeigen:
- Fig. 1: eine Ausgestaltung eines bevorzugten Versorgungsmedienmen- generfassungssystem;
- Fig. 2: beispielhaft einen zeitlichen Verlauf von zeitgenauen Verbrauchs- daten;
- Fig. 3: eine bevorzugte Zählereinrichtung mit einem Stromzähler und ei- nem Gaszähler, die an ein gemeinsames Kommunikationsmodul gekoppelt sind; und
- Fig. 4: beispielhaft ein Blockschaltbild eines bevorzugten Zählers mit ge- koppeltem Kommunikationsmodul eines bevorzugten Versor- gungsmedienmengenerfassungssystems.

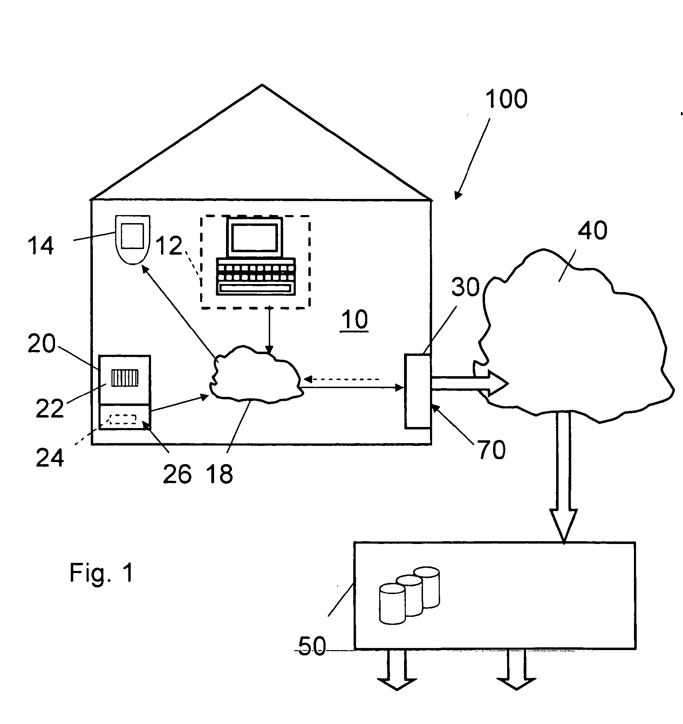

Fig. 1 zeigt zur Erläuterung der Erfindung schematisch eine bevorzugte Ausgestaltung eines Versorgungsmedienmengenerfassungssystems 100, das eine nutzerseitige Einrichtung 10 in einem Privathaushalt aufweist. Die nutzerseitige Einrichtung 10 umfasst wenigstens eine Zählereinrichtung 20, z.B. ein Stromzähler, ein lokales Netzwerk 18 (z.B. WLAN) und einen drahtlosen oder drahtgebundenen Kommunikationskanal 70. Das lokale Netzwerk 18 ist über den Kommunikationskanal 70 mit einer üblichen Firewall nach außen abgesichert.

Der Kommunikationskanal 70 umfasst in diesem Ausführungsbeispiel einen breitbandigen Telefonanschluss mit einem DSL-Router 30, welcher die Zählereinrichtung 20 mit einem globalen Netzwerk 40 (Internet), verbindet. Über diesen Kommunikationskanal 70 ist die nutzerseitige Einrichtung 10 mit der anbieterseitigen Einrichtung 50 verbunden.

Die nutzerseitige Einrichtung 10 dient zur Mengenerfassung eines Versorgungsmediums, etwa elektrischem Strom, der nutzerseitig verbraucht oder auch eingespeist wird. Die Zählereinrichtung 20 umfasst einen Zähler 22 und ein damit gekoppeltes Kommunikationsmodul 24, das zeitgenau Daten bereitstellt und vorzugsweise als Webserver konfiguriert ist. In das lokale Datennetzwerk 18 der nutzerseitigen Einrichtung 10 ist die Zählereinrichtung 20 eingebunden sowie eine lokale Computereinrichtung 12, z.B. ein Nutzer-PC. Ferner kann mindestens eine lokale Anzeigeeinrichtung 14, etwa ein PDA, vorgesehen sein, von der ein Nutzer z.B. zeitgenau, vorzugsweise sekundengenau einen aktuellen Verbrauchswert ablesen kann. Die Anzeigeeinrichtung 14 erhält Anzeigewerte der Zählereinrichtung 20 über das lokale Netzwerk 18.

Die Zählereinrichtung 20 ist über das lokale Netzwerk 18 mit dem Kommunikationskanal 70 bzw. dem DSL-Router 30 verbunden. Die Computereinrichtung 12 ist z.B. über WLAN mit dem DSL-Router 30 verbunden.

Die anbieterseitige Einrichtung 50 umfasst ein Web-Portal z.B. mit einem System oder einer Kopplung an ein System zur Bezahlung der Verbrauchskosten (durch nach außen gehende Blockpfeile angedeutet), ein oder mehrere Datenlager (DWH, Data Warehouse) und eine Webseite für die nutzerseitige Einrichtung 10 und gegebenenfalls andere Dienste des Anbieters. Es können auch mehrere Anbieter für dasselbe Versorgungsmedium der anbieterseitigen Einrichtung 50 zugeordnet sein oder auch mehrere anbieterseitige Einrichtungen 50 vorhanden sein. Der Nutzer kann über die Zählereinrichtung 20 letztendlich bestimmen, mit wem er kommuniziert.

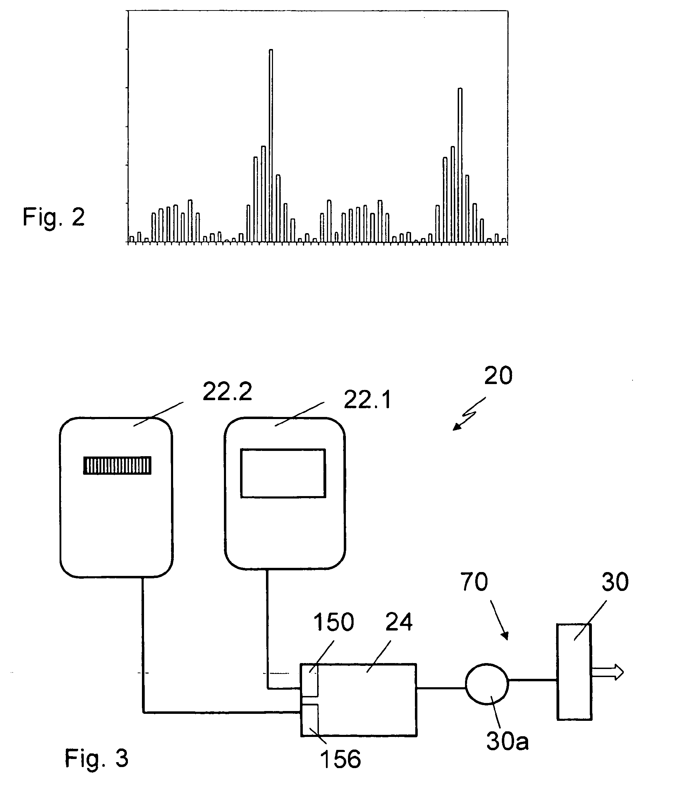

Das Kommunikationsmodul 24 stellt im lokalen Netzwerk 18 eine Webseite der Zählereinrichtung 20 bereit, die für authentifizierte Nutzer auch von extern zugänglich gemacht werden kann. Auf die nutzerseitigen Versorgungsmediendaten kann auch über das anbieterseitige Web-Portal zugegriffen werden. Fig. 2 zeigt dazu beispielhaft einen zeitlichen Verlauf von zeitaktuellen Verbrauchsdaten über einem Tageszeitraum, wie er auf der Webseite dargestellt sein könnte.

Im lokalen Netzwerk 18 können z.B. über die Computereinrichtung 12 Verbrauchsdaten und/oder Einspeisungsdaten über das Kommunikationsmodul 24 abgerufen werden. Zusätzlich können auch im Haus ein oder mehrere Anzeigeeinheiten 14 vorgesehen sein, auf denen sekundengenau Daten der Zählereinrichtung 20 abgelesen werden können.

Die Zählereinrichtung 20 weist einen Bereich 26 auf, in dem das Kommunikationsmodul 24 mit dem Zähler 22 gekoppelt ist. Vorzugsweise ist das Kommunikationsmodul 24 in einem für den Nutzer zugänglichen, ungefährlichen Bereich der Zählereinrichtung 20 angeordnet. Das Kommunikationsmodul 24 kann als Modul lösbar mit dem Zähler 22 der Zählereinrichtung 20 verbunden sein. Das Kommunikationsmodul 24 erhält über eine geeignete Schnittstelle die Versorgungsmediendaten, welche der Zähler 22 erfasst.

Fig. 3 zeigt eine günstige Ausgestaltung einer bevorzugten Zählereinrichtung 20, welche beispielhaft zwei verschiedene Zähler 22.1, 22.2 umfasst, die mit einem gemeinsamen Kommunikationsmodul 24 gekoppelt sind. Der Zähler 22.1 ist beispielhaft als Stromzähler, der Zähler 22.2 beispielhaft als Gaszähler ausgebildet, deren von einer jeweiligen Messeinheit erfasst, in elektrische Signale umgesetzt und an das Kommunikationsmodul 24 über eine erste Schnittstelle 150 für den Stromzähler 22.1 und eine zweite Schnittstelle 156 für den anderen Zähler 22.2 weitergeleitet wird. Dieses leitet, wie beschreiben zeitgenaue Daten, vorzugsweise erste Daten mit einem ersten Zeitraster, etwa im Zwei-Sekunden-Takt, und zweite Daten mit einem zweiten Zeitraster, etwa viertelstündlich, an einen Kommunikationskanal 70 weiter. Dieser kann beispielhaft ein als so genannten Homeplug ausgebildetes Bauteil 30a und einen DSL-Router 30 umfassen. Das als Homeplug ausgebildete Bauteil 30a ist mit einem Datenkabel am Kommunikationsmodul 24 angeschlossen und in eine übliche Stromsteckdose eingesteckt (nicht dargestellt) und moduliert empfangene Signale auf das Stromnetz auf. Die Daten werden vom DSL-Router 30 empfangen und an die nutzerseitige Einrichtung 10 (Fig. 1) und/oder an die anbieterseitige Einrichtung (Fig. 1) weitergeleitet.

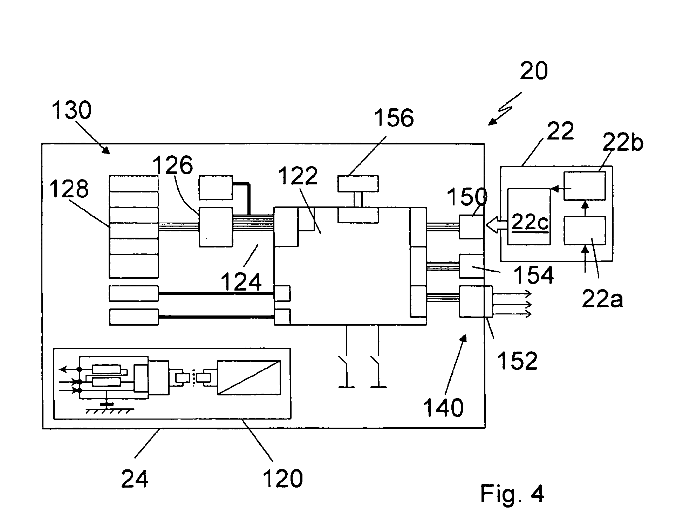

Ein Blockschaltbild einer bevorzugten Zählereinrichtung 20 mit einem Zähler 22 und einem Kommunikationsmodul 24 ist in Fig. 4 dargestellt. Der Zähler 22 entspricht z.B. einem üblichen Industriezähler und umfasst eine übliche Messeinrichtung 22a, mit der eine Menge eines Versorgungsmediums erfasst wird, das anbieterseitig zur Verfügung gestellt wird und welches in der nutzerseitigen Einrichtung 10 (Fig. 1) verbraucht wird, oder gegebenenfalls eingespeist wird. Weiterhin umfasst der Zähler eine Zähleinheit 22b, welche die Messerwerte zählt und in ein oder mehrere Register schreibt. Die Werte werden an einen Speicher 22c übergeben und können über eine als RS232-Schnittstelle oder auch als RS485-Schnittstelle ausgebildete Schnittstelle 150 in das Kommunikationsmodul 24 eingelesen werden, z.B. mit einem DLMS-Zählerprotokoll. An die erste Schnittstelle 150 kann ein erster Zähler (nicht dargestellt) angeschlossen sein (s. z.B. Zähler 22.1 in Fig. 3).

Das Kommunikationsmodul 24 umfasst ein Netzteil 120 zur Stromversorgung, einen Prozessor 122, sowie einen Speicherbereich 130 und einen Schnittstellenbereich 140 mit diversen Schnittstellen 150 - 156.

Die Schnittstelle 150 führt die Daten des ersten Zählers dem Prozessor 122 zu. Der Prozessor 122 ist mit einer weiteren Schnittstelle 152 verbunden, über die Daten an das lokale Netzwerk 18 (Fig. 1) ausgegeben werden können, z.B. über eine Ethernet-Verbindung. Über diese können ein Daten-Gateway des Anbieters, der Nutzer-PC 12 und auch die Anzeigeeinrichtung 14 (Fig.1) erreicht werden. Die Schnittstelle 152 ermöglicht verschiedene Protokolle gleichzeitig.

Ferner ist eine weitere Schnittstelle 154 für einen Service, etwa zur Reparatur oder Installation, vorgesehen und optional eine asynchron serielle Schnittstelle 156 für eine weitere Datenleitung, z.B. eines weiteren Zählers (s. z.B. Zähler 22.2 in Fig. 3). Der Prozessor 122 ist über einen Systembus 126 mit dem Speicherbereich 130 verbunden, der z.B. mit einem flüchtigen Hauptspeicher 128 sowie mit einem nichtflüchtigen Speicher 128, der das Betriebssystem enthält, sowie Speicherbausteine mit nichtflüchtigen Speichern für Netzwerkadresse, Startparameter und Seriennummer und einem I/O-Basisbetriebssystem, das eine Systemparametrierung erlaubt, ausgestattet ist.

Das Kommunikationsmodul 24, das mit der Zählereinrichtung 20 gekoppelt ist, baut eine Kommunikation mit der anbieterseitigen Einrichtung 50 (Fig. 1) auf, die von der anbieterseitigen Einrichtung 10 ausgeht, d.h. die Zählereinrichtung 20 "spricht" in einem bevorzugten Ausführungsbeispiel, während eine Anfrage der anbieterseitigen Einrichtung 50 in diesem Fall nur als Antwort auf die erfolgte Kontaktaufnahme des Kommunikationsmoduls 24 mit der anbieterseitigen Einrichtung 50 erfolgt.

Die Zählereinrichtung 20 sendet periodisch in einem ersten Zeitabstand von wenigen Sekunden, vorzugsweise zwischen 1 und 10 s, vorzugsweise 2 s, erste Daten über den Verbrauch an das lokale Netzwerk 18 und in einem zweiten, deutlich größeren Zeitabstand von mehreren Minuten, vorzugsweise zwischen 10 und 30 min, vorzugsweise viertelstündlich, zweite Daten. Die zweiten Daten werden die anbieterseitige Einrichtung 50 gesendet und dort gespeichert und verarbeitet. Die Daten enthalten die viertelstündlichen Verbrauchswerte (oder Einspeisungswerte), können jedoch auch Fehlerzustände übermitteln, wenn z.B. eine Unterversorgung detektiert wurde. So kann z.B. eine Versorgungsqualität des Anbieters überwacht und gegebenenfalls verbessert werden.

Bei einer Störung der Kommunikation mit der anbieterseitigen Einrichtung 50 werden die ersten und/oder zweiten Daten in der Zählereinrichtung 20 gepuffert und nach Behebung der Störung gesendet.

Es können in der nutzerseitigen Einrichtung 10 auch mehrere Zählereinrichtungen 20 vorgesehen sein, die unterschiedliche Verbrauchsmedien erfassen, etwa Strom und Gas, deren Verbrauchsdaten an die anbieterseitige Einrichtung 50 übermittelt werden. Durch die online-Schaltung der einen oder der mehreren Zählereinrichtung 20 ist das Versorgungsmengenerfassungssystem 100 sehr flexibel. Der Nutzer kann letztlich bestimmen, wer die Daten erhält. Ebenso kann der Nutzer sehr einfach verschiedene Anbieter ansprechen, da er nicht auf deren Konfigurationen zur Kommunikation angewiesen ist sondern diese selbst bereitstellt.

## Patentansprüche

1. Versorgungsmedienmengenerfassungssystem mit einer nutzerseitigen Einrichtung (10) zur nutzerseitigen Mengenerfassung wenigstens eines Versorgungsmediums und einer anbieterseitigen Einrichtung (50) zur Erfassung von versorgungsmedienbezogenen Daten der nutzerseitigen Einrichtung (10), wobei nutzerseitig wenigstens eine Zählereinrichtung (20) für das wenigstens eine Versorgungsmedium vorgesehen ist, wobei die anbieterseitige Einrichtung (50) und die nutzerseitige Einrichtung (10) wenigstens zeitweise in Kommunikationsverbindung stehen, wobei die wenigstens eine Zählereinrichtung (20) zur Erfassung und Weitergabe von zeitgenauen Werten eines Verbrauchs und/oder einer nutzerseitigen Einspeisung des wenigstens einen Versorgungsmediums ausgebildet ist und mit der nutzerseitigen und/oder der anbieterseitigen Einrichtung (10, 50) über einen Kommunikationskanal (70) gekoppelt ist, **dadurch gekennzeichnet, dass** ein mit der Zählereinrichtung (20) gekoppeltes Kommunikationsmodul (24) vorgesehen ist, das aktiv eine Kommunikation mit der anbieterseitigen Einrichtung (50) aufbauen und der anbieterseitigen Einrichtung (50) verbrauchsabhängige und/oder einspeisungsabhängige Daten kommunizieren kann, wobei Zählereinrichtung (20) als Webclient konfiguriert ist.

2. Versorgungsmedienrnengenerfassungssystern nach Anspruch 1, **dadurch gekennzeichnet, dass** die Zählereinrichtung (20) einen Zähler (22) und das Kommunikationsmodul (24) umfasst, wobei der Zähler (22) lokal mit dem Kommunikationsmodul (24) gekoppelt ist, und das Kommunikationsmodul (24) zum Datenaustausch mit dem Kommunikationskanal (70) gekoppelt ist.

3. Versorgungsmedienmengenerfassungssystem nach Anspruch 1, **dadurch gekennzeichnet, dass** die Zählereinrichtung (20) einen Zähler (22), das Kommunikationsmodul (24) und den Kommunikationskanal (70) umfasst, wobei die Zählereinrichtung (20) lokal mit dem Kommunikationsmodul (24) gekoppelt ist und das Kommunikationsmodul (24) zum Datenaustausch mit dem Kommunikationskanal (70) gekoppelt ist.

4. Versorgungsmedienmengenerfassungssystem nach Anspruch 2 oder 3, **dadurch gekennzeichnet, dass** der Zähler (22) und das Kommunikationsmodul (24) in einer baulichen Einheit zusammengefasst sind.

5. Versorgungsmedienmengenerfassungssystem nach einem der Ansprüche 2 bis 4, **dadurch gekennzeichnet, dass** das Kommunikationsmodul (24) in einem für einen Nutzerzugriff vorgesehenen Bereich (26) der Zählereinrichtung (20) lösbar, insbesondere austauschbar, mit dem Zähler (22) gekoppelt ist.

6. Versorgungsmedienmengenerfassungssystem nach einem der vorhergehenden Ansprüche, **dadurch gekennzeichnet,**
- **dass** die Zählereinrichtung (20) als Webserver konfiguriert ist, oder
- **dass** die Zählereinrichtung (20) als ebserver konfiguriert ist und das Kommunikationsmodul (24) wenigstens einen Webserver umfasst, oder
- **dass** die Zählereinrichtung (20) als Webserver konfiguriert ist, das Kommunikationsmodul (24) wenigstens einen Webserver umfasst und das Kommunikationsmodul (24) einen Webclient mit einem Push-Dienst umfasst.

7. Versorgungsmedienmengenerfassungssystem nach einem der vorhergehenden Ansprüche, **dadurch gekennzeichnet, dass** das Kommunikationsmodul (24) eine Webseite für die nutzerseitige Einrichtung (10) be- ' reitstellt und/oder dass die anbieterseitige Einrichtung (50) eine Webseite für die nutzerseitige Einrichtung (10) bereitstellt.

8. Versorgungsmedienmengenerfassungssystem nach einem der vorhergehenden Ansprüche, **dadurch gekennzeichnet, dass** der Kommunikationskanal (70) wenigstens ein Mitglied aus der Gruppe PLC, LAN. WLAN, GSM, GPRS, UMTS, DECT, WIMAX, DSL, Router, Modem, Telefonleitung umfasst.

9. Versorgungsmedienmengenerfassungssystem nach einem der Ansprüche 2 bis 8, **dadurch gekennzeichnet, dass** der wenigstens eine Zähler (22) zur Erfassung eines Stromverbrauchs, eines Gasverbrauchs oder eines Wärmeverbrauchs, eines Wasserverbrauchs, eines Brennstofifverbrauchs ausgebildet ist.

10. Versorgungsmedienmengenerfassungssystem nach einem der Ansprüche 2 bis 9, **dadurch gekennzeichnet,**
- **dass** eine Mehrzahl von Zählern (22), die unterschiedliche Verbrauchsmedien erfassen, vorgesehen ist, oder
- **dass** eine Mehrzahl von Zählern (22), die unterschiedliche Verbrauchsmedien erfassen, vorgesehen ist und wenigstens zwei Zähler (22) mit jeweils mit einem eigenen Kommunikationsmodul (24) gekoppelt sind, oder
- **dass** eine Mehrzahl von Zählern (22), die unterschiedliche Verbrauchsmedien erfassen, vorgesehen ist und wenigstens zwei Zähler (22) mit jeweils mit einem eigenen Kommunikationsmodul (24) gekoppelt sind und eine Mehrzahl von Zählern (20) mit einem gemeinsamen Kommunikationsmodul (24) gekoppelt ist, oder
- **dass** eine Mehrzahl von Zählern (22), die unterschiedliche Verbrauchsmedien erfassen, vorgesehen ist und eine Mehrzahl von Zählern (20) mit einem gemeinsamen Kommunikationsmodul (24) gekoppelt ist.

11. Versorgungsmedienmengenerfassungssystem nach einem der vorhergehenden Ansprüche, **dadurch gekennzeichnet, dass** die Zählereinrichtung (20) zur Erfassung einer eingespeisten Menge von wenigstens einem Versorgungsmedium ausgebildet ist, das nutzerseitig in eine Versorgungsmedienversorgung einspeisbar ist.

12. Verfahren zum Betreiben eines Versorgungsmedienmengenerfassungssystems (100) nach einem der vorhergehenden Ansprüche, das eine nutzerseitige Einrichtung (10) zur nutzerseitigen Mengenerfassung wenigstens eines Versorgungsmediums und eine anbieterseitigen Einrichtung (50) zur Erfassung von versorgungsmedienbezogenen Daten der nutzerseitigen Einrichtung (10) umfasst, wobei nutzerseitig wenigstens eine Zählereinrichtung (20) für das wenigstens eine Versorgungsmedium vorgesehen ist, wobei die anbieterseitige Einrichtung (50) und die nutzerseitige Einrichtung (10) wenigstens zeitweise in Kommunikationsverbindung stehen, **dadurch gekennzeichnet, dass** die wenigstens eine Zählereinrichtung (20) Werte eines Verbrauchs und/oder einer nutzerseitigen Einspeisung des wenigsten einen Versorgungsmediums erfasst und weitergibt und bei der Weitergabe zeitgenaue Daten übermittelt werden, wobei die nutzerseitige und die anbieterseitigen Einrichtung (10, 50) drahtlos oder drahtgebunden in Kommunikationsverbindung mit der Zählereinrichtung (20) stehen und ein mit der Zählereinrichtung (20) gekoppeltes Kommunikationsmodul (24) aktiv eine Kommunikation mit der anbieterseitigen Einrichtung (50) aufbauen und der anbieterseitigen Einrichtung (50) verbrauchsabhängige und/oder einspeisungsabhängige Daten kommunizieren kann, wobei Zählereinrichtung (20) als Webclient konfiguriert ist.

13. Verfahren nach Anspruch 12, **dadurch gekennzeichnet, dass** das Kommunikationsmodul (24) der Zählereinrichtung (20) verbrauchsabhängige und/oder einspeisungsabhängige Daten wenigstens eines Zählers (22) in ein Kommunikationsprotokoll umsetzt, das von einem angekoppelten Kommunikafiionskanal (70) benutzt wird.

14. Verfahren nach Anspruch 13, **dadurch gekennzeichnet, dass** das Kommunikationsmodul (24) aktiv eine Kommunikation mit der anbieterseitigen Einrichtung (50) aufbaut, oder
- dass das Kommunikationsmodul (24) aktiv eine Kommunikation mit der anbieterseitigen Einrichtung (50) aufbaut und die Kommunikation mit der anbieterseitigen Einrichtung (50) überwiegend ausgehend von der nutzerseitigen Einrichtung (10) zur anbieterseitigen Einrichtung (50) erfolgt, oder
- dass das Kommunikationsmodul (24) aktiv eine Kommunikation mit der anbieterseitigen Einrichtung (50) aufbaut und die Kommunikation mit der anbieterseitigen Einrichtung (50) überwiegend ausgehend von der nutzerseitigen Einrichtung (10) zur anbieterseitigen Einrichtung (50) erfolgt und eine Kommunikation seitens der anbieterseitigen Einrichtung (50) nur als Antwort auf eine erfolgte Kontaktaufnahme des Kommunikationsmoduls (24) mit der anbieterseitigen Einrichtung (50) erfolgt, oder
- dass das Kommunikationsmodul (24) aktiv eine Kommunikation mit der anbieterseitigen Einrichtung (50) aufbaut und eine Kommunikation seitens der anbieterseitigen Einrichtung (50) nur als Antwort auf eine erfolgte Kontaktaufnahme des Kommunikationsmoduls (24) mit der anbieterseitigen Einrichtung (50) erfolgt.

15. Verfahren nach einem der Ansprüche 12 bis 14, **dadurch gekennzeichnet, dass** eine Kommunikation seitens der anbieterseitigen Einrichtung (50) mit der nutzerseitigen Einrichtung (10) abhängig von Betriebsbedingungen eines Versorgungsnetzes erfolgt.

16. Verfahren nach einem der Ansprüche 12 bis 15, **dadurch gekennzeichnet, dass** die anbieterseitige Einrichtung (50) über das Kommunikationsmodul (24) gezielt verbraucherindividuelle Anweisungen an die nutzerseitige Einrichtung (10) übermittelt.

17. Verfahren nach einem der Ansprüche 12 bis 16, **dadurch gekennzeichnet, dass** das Kommunikationsmodul (24) wiederholt in ersten, kurzen Zeitabständen erste Daten und in zweiten, längeren Zeitabständen zweite Daten sendet, oder
- dass das Kommunikationsmodul (24) wiederholt in ersten, kurzen Zeitabständen erste Daten und in zweiten, längeren Zeitabständen zweite Daten sendet und die zweiten Daten an die anbieterseitige Einrichtung (50) gesendet werden.

18. Verfahren nach einem der Ansprüche 12 bis 17, **dadurch gekennzeichnet, dass** das Kommunikationsmodul (24) mit einem nutzerseitigen lokalen Netzwerk (18) kommuniziert.

19. Verfahren nach einem der Ansprüche 12 bis 18, **dadurch gekennzeichnet, dass** Verbrauchsdaten und/oder Verbrauchsspezifikationen auf einer zählereinrichtungsspezifischen Webseite dargestellt werden.

20. Verfahren nach einem der Ansprüche 12 bis 19, **dadurch gekennzeichnet, dass** nutzerseitige Schwellwerte für einen Verbrauch und/oder eine Einspeisung des Versorgungsmediums vorgegeben werden.

21. Verfahren nach einem der Ansprüche 12 bis 20, **dadurch gekennzeichnet, dass** mehrere Zähler (20) unterschiedliche Versorgungsmedien erfassen und Daten an die anbieterseitige Einrichtung (50) übermitteln,
oder
- dass mehrere Zähler (20) unterschiedliche Versorgungsmedien erfassen und Daten an die anbieterseitige Einrichtung (50) übermitteln und mehrere der Zähler (22) die Daten unabhängig voneinander übermitteln.

22. Verfahren nach Anspruch 21, **dadurch gekennzeichnet, dass** die Zähler (22) die Daten über ein gemeinsames Kommunikationsmodul (24) übermitteln.

23. Verfahren nach einem der Ansprüche 12 bis 22, **dadurch gekennzeichnet, dass** eine transaktionsorientierte Bepreisung des nutzerseitigen Verbrauchs und/oder der nutzerseitigen Einspeisung des Versorgungsmediums erfolgt.

24. Zählereinrichtung nach einem der Ansprüche 1 bis 11 für ein Versorgungsmedienmengenerfassungssystem (100), das eine nutzerseitige Einrichtung (10) zur Mengenerfassung wenigstens eines Versorgungsmediums und eine anbieterseitige Einrichtung (50) zur Erfassung von Versorgungsmedien-Daten der nutzerseitigen Einrichtung (10) umfasst, eine Ausgestaltung zur Erfassung von zeitgenauen Werten eines Verbrauchs und/oder einer nutzerseitigen Einspeisung des wenigstens einen Versorgungsmediums und einer Kopplungsmöglichkeit mit der nutzerseitigen und/oder der anbieterseitigen Einrichtung (10, 50) über einen Kommunikationskanal (70) **gekennzeichnet durch** ein baulich angekoppeltes Kommunikationsmodul (24), das aktiv eine Kommunikation mit der anbieterseitigen Einrichtung (50) aufbauen und der anbieterseitigen Einrichtung (50) verbrauchsabhängige und/oder einspeisungsabhängige Daten kommunizieren kann.

25. Zählereinrichtung nach Anspruch 24, **dadurch gekennzeichnet, dass** das Kommunikationsmodul (24) als Webserver konfiguriert ist und/oder dass das Kommunikationsmodul (24) als Webclient mit einem Push-Dienst konfiguriert ist.

## Claims

1. Supply medium quantity measurement system having a user-end device (10) for user-end quantity measurement of at least one supply medium and a supplier-end device (50) for measuring of supply medium-related data of the user-end device (10), where at least one counter device (20) is provided at the user end for the at least one supply medium, where the supplier-end device (50) and the user-end device (10) are at least at times in communicative connection, where the at least one counter device (20) is designed for measuring and transmitting of precisely timed values for consumption and/or a user-end supply of the at least one supply medium and is linked via a communications channel (70) to the user-end and/or supplier-end device (10, 50), **characterized in that** a communications module (24) linked to the counter device (20) is provided that can actively establish communication with the supplier-end device (50) and communicate consumption-dependent and/or supply-dependent data to the supplier-end device (50), where the counter device (20) is configured as a web client.

2. Supply medium quantity measurement system according to Claim 1, **characterized in that** the counter device (20) comprises a counter (22) and the communications module (24), where the counter (22) Is linked locally to the communications module (24), and the communications module (24) is linked to the communications channel (70) for data exchange.

3. Supply medium quantity measurement system according to Claim 1, **characterized in that** the counter device (20) comprises a counter (22), the communications module (24) and the communications channel (70), where the counter device (20) is linked locally to the communications module (24) and the communications module is linked to the communications channel (70) for data exchange.

4. Supply medium quantity measurement system according to Claim 2 or 3, **characterized in that** the counter (22) and the communications module (24) are combined in a structural unit.

5. Supply medium quantity measurement system according to one of Claims 2 to 4, **characterized in that** the communications module (24) is linked detachably, In particular exchangeably, to the counter (22) in an area (26) of the counter device (20) intended for user access.

6. Supply medium quantity measurement system according to one of the preceding claims, **characterized in that**
- the counter device (20) Is configured as a web server, or
- the counter device (20) is configured as a web server and the communications module (24) comprises at least one web server, or
- the counter device is configured as a web server, the communications module (24) comprises at least one web server, and the communications module (24) comprises a web client with a push service.

7. Supply medium quantity measurement system according to one of the preceding claims, **characterized in that** the communications module (24) provides a website for the user-end device (10) and/or that the supplier-end device (50) provides a website for the user-end device (10).

8. Supply medium quantity measurement system according to one of the preceding claims, **characterized in that** the communications channel (70) comprises at least one member from the group PLC, LAN, WLAN, GSM, GPRS, UMTS, DECT, WIMAX, DSL, router, modem, telephone line.

9. Supply medium quantity measurement system according to one of Claims 2 to 8, **characterized in that** the at least one counter (22) Is designed for measuring current consumption, gas consumption, heat consumption, water consumption or fuel consumption.

10. Supply medium quantity measurement system according to one of Claims 2 to 9, **characterized in that**
- a plurality of counters (22) measuring differing consumption media is provided, or
- a plurality of counters (22) measuring differing consumption media is provided and at least two counters (22) are each linked to their own communications module (24), or
- a plurality of counters (22) measuring differing consumption media is provided, at least two counters (22) are each linked to their own communications module (24) and a plurality of counters (20) are linked to a common communications module (24), or
- a plurality of counters (22) measuring differing consumption media is provided and a plurality of counters (20) are linked to a common communications module (24).

11. Supply medium quantity measurement system according to one of the preceding claims, **characterized in that** the counter device (20) for measuring of a supplied quantity of at least one supply medium Is designed that can be supplied at the user end into a supply medium supply.

12. Method for operating a supply medium quantity measurement system (100) according to one of the preceding claims that comprises a user-end device (10) for user-end quantity measurement of at least one supply medium and a supplier-end device (50) for measuring of supply medium-related data of the user-end device (10), where at least one counter device (20) is provided at the user end for the at least one supply medium, where the supplier-end device (50) and the user-end device (10) are at least at times in communicative connection, **characterized in that** the at least one counter device (20) measures and transmits values of a consumption and/or a user-end supply of the at least one supply medium and during transmission precisely timed data are transmitted, where the user-end and the supplier-end device (10, 50) are in communicative connection without wire or with wire connection with the counter device (20), and a communications module (24) linked to the counter device (20) can actively establish communication with the supplier-end device (50) and communicate consumption-dependent and/or supply-dependent data to the supplier-end device (50), where the counter device (20) is configured as a web client.

13. Method according to Claim 12, **characterized in that** the communications module (24) of the counter device (20) transfers consumption-dependent and/or supply-dependent data of at least one counter (22) to a communication protocol used by a linked communications channel (70).

14. Method according to Claim 13, **characterized in that** the communications module (24) actively establishes communication with the supplier-end device (50), or
- the communications module (24) actively establishes communication with the supplier-end device (50) and communication with the supplier-end device (50) is predominantly effected from the user-end device (10) to the supplier-end device (50), or
- the communications module (24) actively establishes communication with the supplier-end device (50) and communication with the supplier-end device (50) Is predominantly effected from the user-end device (10) to the supplier-end device (50) and a communication on the part of the supplier-end device (50) is effected only as a response to a contact made by the communications module (24) with the supplier-end device (50), or
- the communications module (24) actively establishes communication with the supplier-end device (50) and a communication on the part of the supplier-end device (50) is effected only as a response to a contact made by the communications module (24) with the supplier-end device (50).

15. Method according to one of Claims 12 to 14, **characterized in that** a communication on the part of the supplier-end device (50) with the user-end device (10) is effected depending on the operating conditions of a supply network.

16. Method according to one of Claims 12 to 15, **characterized in that** the supplier-end device (50) selectively transfers consumer-individual instructions to the user-end device (10) via the communications module (24).

17. Method according to one of Claims 12 to 16, **characterized in that** the communications module (24) repeatedly transmits first data at first and brief time intervals and second data in second and longer time intervals, or
- the communications module (24) repeatedly transmits first data in first and brief time intervals and second data in second and longer time intervals and the second data are transmitted to the supplier-end device (50).

18. Method according to one of Claims 12 to 17, **characterized in that** the communications module (24) communicates with a user-end local network (18).

19. Method according to one of Claims 12 to 18, **characterized in that** consumption data and/or consumption specifications are displayed on a counter device-specific website.

20. Method according to one of Claims 12 to 19, **characterized in that** user-end threshold values for a consumption and/or a supply of the supply medium are preset.

21. Method according to one of Claims 12 to 20, **characterized in that** several counters (20) measure different supply media and transmit data to the supplier-end device (50), or
- several counters (20) measure different supply media and transmit data to the supplier-end device (50) and several of the counters (20) transmit the data independently of one another.

22. Method according to Claim 21, **characterized in that** the counters (22) transmit the data via a common communications module (24).

23. Method according to one of Claims 12 to 22, **characterized in that** a transaction-oriented pricing of the user-end consumption and/or of the user-end supply of the supply medium is achieved.

24. Method according to one of Claims 1 to 11 for a Supply medium quantity measurement system (100) comprising a user-end device (10) for quantity measurement of at least one supply medium and a supplier-end device (50) for measuring of supply medium data of the user-end device (10), an embodiment for measuring of precisely timed values of a consumption and/or of a user-end supply of the at least one supply medium and a linkage possibility with the user-end and/or supplier-end device (10, 50) via a communications channel (70), **characterized by** a structurally linked communications module (24) that can actively establish communication with the supplier-end device (50) and communicate consumption-dependent and/or supply-dependent data to the supplier-end device (50).

25. Counter device according to Claim 24, **characterized in that** the communications module (24) is configured as a web server and/or that the communications module (24) is configured as a web client with a push service.

## Revendications

1. Système de détermination quantitative de ressources distribuées avec un dispositif (10) côté utilisateur destiné à la détermination quantitative côté utilisateur d'au moins une ressource distribuée, et un dispositif (50) côté distributeur, destiné à acquérir des données liées aux ressources distribuées et provenant du dispositif (10) côté utilisateur, sachant qu'au moins un dispositif de comptage (20) de l'au moins une ressource distribuée est prévu côté utilisateur, que le dispositif (50) côté distributeur est, au moins par moments, en liaison de communication avec le dispositif (10) côté utilisateur, l'au moins un dispositif de comptage (20) étant conçu pour acquérir et transmettre des valeurs temporelles précises relatives à une consommation et/ou à un approvisionnement côté utilisateur de l'au moins une ressource distribuée, et étant couplé au dispositif (10) côté utilisateur et/ou au dispositif (50) côté distributeur par l'intermédiaire d'un canal de communication (70), **caractérisé en ce qu'**est prévu un module de communication (24) couplé au dispositif de comptage (20), lequel module peut établir de manière active une communication avec le dispositif (50) côté distributeur et communiquer au dispositif (50) côté distributeur des données dépendant de la consommation et/ou de l'approvisionnement, sachant que le dispositif de comptage (20) est configuré comme un client Web.

2. Système de détermination quantitative de ressources distribuées selon la revendication 1, **caractérisé en ce que** le dispositif de comptage (20) comprend un compteur (22) et le module de communication (24), sachant que le compteur (22) est couplé localement au module de communication (24) et que le module de communication (24) est couplé au canal de communication (70) pour l'échange de données.

3. Système de détermination quantitative de ressources distribuées selon la revendication 1, **caractérisé en ce que** le dispositif de comptage (20) comprend un compteur (22), le module de communication (24) et le canal de communication (70), sachant que le dispositif de comptage (20) est couplé localement au module de communication (24) et que le module de communication (24) est couplé au canal de communication (70) pour l'échange de données.

4. Système de détermination quantitative de ressources distribuées selon la revendication 2 ou 3, **caractérisé en ce que** le compteur (22) et le module de communication (24) sont rassemblés dans une unité de construction.

5. Système de détermination quantitative de ressources distribuées selon l'une des revendications 2 à 4, **caractérisé en ce que** le module de communication (24) est couplé au compteur (22), de manière à pouvoir être détaché, en particulier remplacé, dans une partie (26) du dispositif de comptage (20) prévue pour l'accès par un utilisateur.

6. Système de détermination quantitative de ressources distribuées selon l'une des revendications précédentes, **caractérisé en ce**
- **que** le dispositif de comptage (20) est configuré en tant que client Web, ou
- **que** le dispositif de comptage (20) est configuré en tant que client Web et que le module de communication (24) comprend au moins un serveur Web, ou
- **que** le dispositif de comptage (20) est configuré en tant que client Web, que le module de communication (24) comprend au moins un serveur Web et que le module de communication (24) comprend un client Web avec un serveur Push.

7. Système de détermination quantitative de ressources distribuées selon l'une des revendications précédentes, **caractérisé en ce que** le module de communication (24) met à disposition une page Web pour le dispositif (10) côté utilisateur et/ou que le dispositif (50) côté distributeur met à disposition une page Web pour le dispositif (10) côté utilisateur.

8. Système de détermination quantitative de ressources distribuées selon l'une des revendications précédentes, **caractérisé en ce que** le canal de communication (70) comprend au moins un membre du groupe PLC, LAN, WLAN, GSM, GPRS, UMTS, DECT, WIMAX, DSL, routeur, modem, ligne téléphonique.

9. Système de détermination quantitative de ressources distribuées selon l'une des revendications 2 à 8, **caractérisé en ce que** l'au moins un compteur (22) est conçu pour déterminer une consommation électrique, une consommation de gaz ou une consommation de chaleur, une consommation d'eau, une consommation de carburant.

10. Système de détermination quantitative de ressources distribuées selon l'une des revendications 2 à 9, **caractérisé en ce**
- **qu'**est prévue une pluralité de compteurs (22) qui détermine différentes ressources distribuées, ou
- **qu'**est prévue une pluralité de compteurs (22) qui détermine différentes ressources distribuées, et qu'au moins deux compteurs (22) sont couplés à respectivement un module de communication (24) différent, ou
- **qu'**est prévue une pluralité de compteurs (22) qui déterminé différentes ressources distribuées et qu'au moins deux compteurs (22) sont couplés respectivement à un module de communication (24) différent, et qu'une pluralité de compteurs (20) est couplée à un module de communication (24) commun, ou
- **qu'**est prévue une pluralité de compteurs (22) qui détermine différentes ressources distribuées et qu'une pluralité de compteurs (20) est couplée à un module de communication (24) commun.

11. Système de détermination quantitative de ressources distribuées selon l'une des revendications précédentes, **caractérisé en ce que** le dispositif de comptage (20) est conçu pour déterminer une quantité approvisionnée d'au moins une ressource distribuée qui peut être approvisionnée côté utilisateur dans une distribution de ressources distribuées.

12. Procédé d'exploitation d'un système (100) de détermination quantitative de ressources distribuées selon l'une des revendications précédentes, qui comprend un dispositif (10) côté utilisateur destiné à la détermination quantitative côté utilisateur d'au moins une ressource distribuée, et un dispositif (50) côté distributeur, destiné à acquérir des données liées aux ressources distribuées et provenant du dispositif (10) côté utilisateur, sachant qu'au moins un dispositif de comptage (20) de l'au moins une ressource distribuée est prévu côté utilisateur, que le dispositif (50) côté distributeur est, au moins par moments, en liaison de communication avec le dispositif (10) côté utilisateur, **caractérisé en ce que** l'au moins un dispositif de comptage (20) acquiert et transmet des valeurs relatives à une consommation et/ou à un approvisionnement côté utilisateur de l'au moins une ressource distribuée, et que des données temporelles précises sont envoyées lors de la transmission, sachant que le dispositif (10) côté utilisateur et le dispositif (50) côté distributeur sont en liaison de communication par fil ou sans fil avec le dispositif de comptage (20) et qu'un module de communication (24) couplé au dispositif de comptage (20) peut établir de manière active une communication avec le dispositif (50) côté distributeur et communiquer au dispositif (50) côté distributeur des données dépendant de la consommation et/ou de l'approvisionnement, sachant que le dispositif de comptage (20) est configuré en tant que client Web.

13. Procédé selon la revendication 12, **caractérisé en ce que** le module de communication (24) du dispositif de comptage (20) transforme les données relatives à la consommation et/ou à l'approvisionnement d'au moins un compteur (22) en un protocole de communication qui est utilisé par un canal de communication (70) couplé.

14. Procédé selon la revendication 13, **caractérisé en ce que** le module de communication (24) établit de manière active une communication avec le dispositif (50) côté distributeur, ou
- que le module de communication (24) établit de manière active une communication avec le dispositif (50) côté distributeur et que la communication avec le dispositif (50) côté distributeur a lieu principalement à partir du dispositif (10) côté utilisateur vers le dispositif (50) côté distributeur, ou
- que le module de communication (24) établit de manière active une communication avec le dispositif (50) côté distributeur et que la communication avec le dispositif (50) côté distributeur a lieu principalement à partir du dispositif (10) côté utilisateur vers le dispositif (50) côté distributeur, et qu'une communication émanant du dispositif (50) côté distributeur n'a lieu qu'en tant que réponse à une prise de contact entreprise par le module de communication (24) avec le dispositif (50) côté distributeur, ou
- que le module de communication (24) établit de manière active une communication avec le dispositif (50) côté distributeur, et qu'une communication émanant du dispositif (50) distributeur n'a lieu qu'en tant que réponse à une prise de contact entreprise par le module de communication (24) avec le dispositif (50) côté distributeur.

15. Procédé selon l'une des revendications 12 à 14, **caractérisé en ce qu'**une communication émanant du dispositif (50) côté distributeur vers le dispositif (10) côté utilisateur a lieu en fonction des conditions d'exploitation d'un réseau de distribution.

16. Procédé selon l'une des revendications 12 à 15, **caractérisé en ce que** le dispositif (50) côté distributeur transmet, par l'intermédiaire du module de communication (24), au dispositif (10) côté utilisateur des instructions individuelles ciblées en fonction de la consommation.

17. Procédé selon l'une des revendications 12 à 16, **caractérisé en ce que** le module de communication (24) envoie de manière répétitive des premières données dans des premiers intervalles de temps courts et des deuxièmes données dans des deuxièmes intervalles de temps plus longs, ou
- que le module de communication (24) envoie de manière répétitive des premières données dans des premiers intervalles de temps courts et des deuxièmes données dans des deuxièmes intervalles de temps plus longs, et que les deuxièmes données sont envoyées au dispositif (50) côté distributeur.

18. Procédé selon l'une des revendications 12 à 17, **caractérisé en ce que** le module de communication (24) communique avec un réseau local (18) côté utilisateur.

19. Procédé selon l'une des revendications 12 à 18, **caractérisé en ce que** des données de consommation et/ou des spécifications de consommation sont affichées sur une page Web spécifique au dispositif de comptage.

20. Procédé selon l'une des revendications 12 à 19, **caractérisé en ce que** sont prédéfinies des valeurs seuils côté utilisateur d'une consommation et/ou d'un approvisionnement de la ressource distribuée.

21. Procédé selon l'une des revendications 12 à 20, **caractérisé en ce que** plusieurs compteurs (20) permettent d'acquérir différentes ressources distribuées et transmettent des données au dispositif (50) côté distributeur, ou
- que plusieurs compteurs (20) permettent d'acquérir différentes ressources distribuées et transmettent des données au dispositif (50) côté distributeur, et que plusieurs des compteurs (22) transmettent les données indépendamment les uns des autres.

22. Procédé selon la revendication 21, **caractérisé en ce que** les compteurs (22) transmettent les données par l'intermédiaire d'un module de communication (24) commun.

23. Procédé selon l'une des revendications 12 à 22, **caractérisé en ce qu'**a lieu, en fonction de la transaction, une tarification de la consommation côté utilisateur et/ou de l'approvisionnement côté utilisateur de la ressource distribuée.

24. Dispositif de comptage selon l'une des revendications 1 à 11 pour un système (100) de détermination quantitative de ressources distribuées qui comprend un dispositif (10) côté utilisateur destiné à la détermination quantitative d'au moins une ressource distribuée, et un dispositif (50) côté distributeur, destiné à acquérir des données liées aux ressources distribuées provenant du dispositif (10) côté utilisateur, une conception destinée à acquérir des valeurs temporelles précises d'une consommation et/ou d'un approvisionnement côté utilisateur de l'au moins une ressource distribuée et d'une possibilité de couplage au dispositif (10) côté utilisateur et/ou au dispositif (50) côté distributeur par l'intermédiaire d'un canal de communication (70) **caractérisé par** un module de communication (24) de conception couplée qui peut établir de manière active une communication avec le dispositif (50) côté distributeur et communiquer au dispositif (50) côté distributeur des données dépendant de la consommation et/ou de l'approvisionnement.

25. Dispositif de comptage selon la revendication 24, **caractérisé en ce que** le module de communication (24) est configuré en tant que serveur Web et/ou que le module de communication (24) est configuré en tant que client Web avec un serveur Push.
